# EUROPÄISCHE PATENTANMELDUNG

(11) **EP 2 484 211 A1**
(43) Veröffentlichungstag der Anmeldung: **08.08.2012**
(21) Anmeldenummer: 12401008.3
(22) Anmeldetag: 24.01.2012
(51) Int. Cl.: A21B 3/04, F24C 15/32

(54) **Gargerät**

(30) Priorität: 08.02.2011 DE 102011011393
(71) Anmelder: Miele & Cie. KG, 33332 Gütersloh (DE)
(72) Erfinder: Becker, Torben, 33613 Bielefeld (DE)

(57) **Zusammenfassung**

Gargerät (1) mit einer Verdampfungseinrichtung (2) zum Bedampfen eines Garraumes (3). Die Verdampfungseinrichtung (2) umfasst eine Heizeinrichtung (4) und einen Verdampfungsbehälter (5). Dabei weist der Verdampfungsbehälter (5) eine Abfuhr (6) für Dampf auf, die dazu geeignet und ausgebildet ist, den Dampf wenigstens teilweise in den Garraum (3) zu führen. Ein erheblicher Anteil der zu verdampfenden Flüssigkeitsmenge (8) ist in dem Verdampfungsbehälter (5) aufnehmbar, wobei dieser Anteil der zu verdampfenden Flüssigkeit (20) in dem Verdampfungsbehälter (5) aufheizbar und verdampfbar ist.

## Beschreibung

Die vorliegende Erfindung betrifft ein Gargerät mit einem Garraum, der mittels verschiedener Betriebsarten wie zum Beispiel Oberhitze, Unterhitze oder Umluft beheizt werden kann. Zusätzlich ist eine Verdampfungseinrichtung vorgesehen.

Die Weiterentwicklungen im Bereich von Gargeräten sind nicht nur auf einen besseren Komfort ausgerichtet, sondern auch dahin gehend, verschiedenste Garprozesse weiter zu optimieren. Auch für private Küchen werden daher Küchengeräte angeboten, die früher nur aus dem professionellen Bereich bekannt waren. Solche modernen Küchengeräte können das Kochen und Backen nicht nur erheblich erleichtern, sondern sind oft mit verschiedenen Zusatzfunktionen ausgestattet, die neben einer komfortableren Bedienung auch das Ergebnis eines Garvorgangs qualitativ erheblich verbessern können.

Das Bedampfen des Garraumes kann zum Beispiel im Bereich von Gargeräten mit einem Garraum eine solche vorteilhafte Zusatzfunktion sein. Diese Funktion ermöglicht es einem Benutzer, Dampf in den Garraum einzuleiten, um die Luftfeuchtigkeit des Garprozesses auf die entsprechenden bevorzugten Bedingungen einzustellen. Zum Beispiel können beim Backen von Brot oder Brötchen die Teiglinge durch das Einbringen von Dampf in den Garraum beim Aufgehen geschmeidig gehalten werden. Durch den Dampf trocknet die Oberfläche der Teiglinge nicht so stark aus und ein eventuelles Aufreißen der Teiglinge kann so besser verhindert werden. Auch beim Garen von großen Fleischstücken, wie zum Beispiel einem Braten, kann dem Austrocknen des Garguts durch das Bedampfen des Garraumes besser entgegengewirkt werden.

Bekannte Vorrichtungen zum Einbringen von Dampf in den Garraum funktionieren zweckgemäß. Dabei wird zum Beispiel Wasser einem Dampferzeuger zugeführt und in diesem verdampft und anschließend in den Garraum eingeleitet. Nachteilig bei den bekannten Systemen ist allerdings, dass sie in regelmäßigen Abständen entkalkt werden müssen, um eine optimale Funktion weiter zu gewährleisten und um mögliche Schäden an dem Dampferzeuger oder eventuell sogar an dem Gargerät selber zu vermeiden.

Überall da, wo Wasser über 60°C erhitzt wird, setzt sich Kalk ab. Dieser setzt sich insbesondere im Bereich der Heizquelle, die zur Verdampfung verwendet wird, ab. Der sich absetzende Kalk bildet nach und nach eine Kalkschicht, die je nach Anordnung des Dampferzeugers auch abbröckeln kann. Damit das gesamte System nicht durch Kalk und Kalkablagerungen verstopft wird, müssen bekannte Systeme daher regelmäßig entkalkt werden.

Bei manchen bekannten Systemen kann es vorkommen, dass genau dann, wenn man die Funktion zum Bedampfen des Garraumes verwenden will, erst die Entkalkung durchgeführt werden muss. Zwar weisen heutzutage hochwertige Geräte rechtzeitig darauf hin, dass bald eine Entkalkung vorgenommen werden soll, dennoch kann man aus Zeitgründen das Entkalken eventuell nicht durchführen und vergisst es anschließend. Beim nächsten Bedarf an Dampf im Garraum kann es dann unter Umständen nötig sein, zunächst zu entkalken.

Abgesehen davon nimmt das Entkalken immer Zeit in Anspruch und verlangt in manchen Fällen sogar extra Zubehör, das separat gelagert werden muss. Das ist eine unerwünschte Komforteinbuße, da Wartungsarbeiten immer als lästig empfunden werden und zeitaufwändig sind. Das Gerät muss zum Entkalken oft mit einer speziellen Flüssigkeit erhitzt und anschließend aufwändig gespült werden. Auch zusätzliche Technik kann von Nöten sein, um zu ermitteln, ob und wann ein Gerät entkalkt werden muss. Das Entkalken nach einer bestimmten Anzahl von Garvorgängen mit der Benutzung von Dampf ist eher ungünstig, da die Menge an Kalk je nach verwendeter Wasserqualität stark unterschiedlich sein kann.

Es ist daher die Aufgabe der vorliegenden Erfindung, ein Gargerät zur Verfügung zu stellen, bei dem das Entkalken erheblich reduziert werden kann.

Diese Aufgabe wird gelöst durch ein Gargerät mit den Merkmalen des Anspruchs 1. Bevorzugte Weiterbildungen der Erfindung ergeben sich aus den Unteransprüchen. Weitere Vorteile und Merkmale der Erfindung sind im Ausführungsbeispiel angegeben.

Das erfindungsgemäße Gargerät weist wenigstens eine Verdampfungseinrichtung zum Bedampfen wenigstens eines Garraumes auf. Diese wenigstens eine Verdampfungseinrichtung umfasst wenigstens eine Heizeinrichtung und wenigstens einen Verdampfungsbehälter. An diesem Verdampfungsbehälter ist wenigstens eine Abfuhr für Dampf vorgesehen, die dazu geeignet und ausgebildet ist, den Dampf wenigstens teilweise in den wenigstens einen Garraum zu führen. Ein erheblicher Anteil der zu verdampfenden Flüssigkeitsmenge kann in dem Verdampfungsbehälter aufgenommen werden. Dieser Anteil der zu verdampfenden Flüssigkeit kann in dem Verdampfungsbehälter auf einmal aufgeheizt und verdampft werden.

Eventuell nötige Verbindungssysteme, wie z. B. Schläuche oder Dampfröhrchen, die die Zufuhr und die Abfuhr der Verdampfungseinrichtung mit einer Flüssigkeitszufuhr und dem Garraum verbinden, können Teil der Verdampfungseinrichtung sein.

Ein derart ausgestaltetes Gargerät bietet viele Vorteile. Ein erheblicher Vorteil ist, dass bei der Verwendung eines solchen Verdampfungsbehälters, der einen erheblichen Anteil der zu verdampfenden Flüssigkeitsmenge aufnehmen kann, keine kleinbauenden Abschnitte in der Verdampfungseinrichtung verbaut werden müssen, die durch Kalkanlagerungen, Kalk oder sonstige Reststoffe verstopfen könnten.

Die Flüssigkeit wird in einen unter Umständen relativ großen Verdampfungsbehälter eingebracht und direkt in diesem verdampft. Ein komplexeres Innenleben der Verdampfungseinrichtung ist dadurch nicht mehr nötig, wodurch das Entkalken der Verdampfungseinrichtung unter Verwendung eines erfindungsgemäßen Verdampfungsbehälters stark reduziert werden kann. In bevorzugten Ausgestaltungen kann ein Entkalken sogar ganz vermieden werden.

Wie in herkömmlich verbauten Systemen kann zwar immer noch Kalk in der Verdampfungseinrichtung ausfallen und sich ablagern, dieser stört allerdings nicht mehr die Funktionsweise der Verdampfungseinrichtung.

In bevorzugten Ausgestaltungen beinhaltet der erhebliche Anteil der zu verdampfenden Flüssigkeitsmenge wenigstens 50% und insbesondere wenigstens 75% der zu verdampfenden Flüssigkeitsmenge. Es ist besonders bevorzugt, dass die gesamte zu verdampfende Flüssigkeitsmenge auf einmal in dem Verdampfungsbehälter aufgenommen werden kann.

Weiter ist es bevorzugt, dass der wenigstens eine Garraum über wenigstens eine Heizquelle thermisch beheizbar ist. Je nachdem ob das Gargerät als Backofen, Dampfgarer, Mikrowelle oder Kombigerät ausgelegt ist, können zum Beheizen des Garraumes verschiedene Heizquellen verwendet werden. Dazu gehören zum Beispiel Unterhitze-, Oberhitze-, Umluft-, Grill- oder Mikrowellenheizquellen.

Besonders bevorzugt ist der Heizeinrichtung der Verdampfungseinrichtung eine Auffangeinrichtung zugeordnet, die zur Aufnahme wenigstens eines Reststoffes geeignet ist. Dabei ist die Auffangeinrichtung insbesondere für Kalk geeignet, eignet sich aber auch für die Aufnahme jeglicher Partikel.

In besonders bevorzugten Ausgestaltungen ist die Auffangeinrichtung Teil des Verdampfungsbehälters. Dabei kann der Verdampfungsbehälter um ein gewisses Maß größer ausgebildet sein, als die maximal zu verdampfende Menge an Flüssigkeit, so dass der Verdampfungsbehälter ein Aufnahmereservoir für Feststoffe, wie zum Beispiel Kalk, zur Verfügung stellt.

In besonders bevorzugten Ausgestaltungen weist der Verdampfungsbehälter dazu ein Flüssigkeitsaufnahmevolumen und ein Reststoffaufnahmevolumen auf. Das Reststoffaufnahmevolumen ist dazu geeignet und ausgebildet, wenigstens die in einer vorbestimmten Zeit erwartende Menge des wenigstens einem Feststoffs aufzunehmen. Die in einer vorbestimmten Zeit erwartete Menge des wenigstens einen Feststoffs, richtet sich dabei insbesondere nach der Lebensdauer des Gargerätes, vorzugsweise aber auch nach der der Verdampfungseinrichtung.

Bei der Berechnung der Lebensdauer können verschiedenste Parameter berücksichtigt werden. Zum Beispiel kann mit einbezogen werden, wie oft die Verdampfungseinrichtung voraussichtlich durchschnittlich verwendet wird. Dies kann z. B. alle 2, 3, 4, 5 Tage oder sogar jeden Tag der Fall sein. Des Weiteren wird berücksichtigt, über wie viele Jahre ein entsprechendes Gargerät durchschnittlich verwendet wird. Dabei können z. B. 1, 2, 3, 4, 5 oder auch beispielsweise 10 Jahre mit in die Berechnung einfließen. Bei der Berechnung der Lebensdauer wird vorzugsweise auch mit einbezogen, dass zum Verdampfen Wasser verschiedener Härtegrade benutzt werden könnte. Besonders bevorzugt ist der Verdampfungsbehälter so groß ausgelegt, dass der anfallende Kalk bei maximal vorgesehener Benutzung der Verdampfungseinrichtung über eine maximal vorgesehene Dauer aufgenommen werden kann.

Das Flüssigkeitsaufnahmevolumen ist zu Beginn, also ohne jegliche Kalk- oder Reststoffablagerung, gleich dem gesamten Fassungsvermögen des Verdampfungsbehälters. Dabei sind sinnvolle bzw. zweckmäßige Volumen zwischen 50 ml und 500 ml denkbar. Auch kleinere oder größere Gesamtvolumen sind möglich. Im Laufe der Zeit wird sich bei Benutzung der Verdampfungseinrichtung nach und nach Kalk in dem Verdampfungsbehälter absetzen. Dies wird insbesondere an der bzw. den Heizeinrichtungen geschehen. Die so entstehende Kalkschicht verkleinert nach und nach das Flüssigkeitsaufnahmevolumen des Verdampfungsbehälters.

Um eine ausreichende Menge an Reststoff aufnehmen zu können weist das Reststoffaufnahmevolumen bevorzugt eine Größe von wenigstens 1 %, 2 %, 5%, 10%, 20%, 30%, 40% oder 50% des Flüssigkeitsaufnahmevolumens auf. Auch andere Größenverhältnisse sind denkbar. Je größer das Reststoffaufnahmevolumen ist, umso länger ist die Lebensdauer der Verdampfungseinrichtung. Dabei ist bei der Auslegung der Gesamtgröße des Verdampfungsbehälters darauf zu achten, dass das Flüssigkeitsaufnahmevolumen auch bei sehr starker Verkalkung nicht unter ein vorbestimmtes Volumen sinkt. Dazu sollte das anfängliche Volumen des Verdampfungsbehälters ausreichend groß gewählt werden, so dass das Flüssigkeitsaufnahmevolumen wenigstens während der durchschnittlichen Lebensdauer oder länger größer als die zu verdampfende Flüssigkeitsmenge ist, auch wenn sich viel Kalk in dem Verdampfungsbehälter ablagert.

Es ist weiterhin bevorzugt, dass die Heizeinrichtung großflächig ausgeführt ist. Dazu kann zum Beispiel wie bei einem Wasserkocher der komplette oder auch nur ein Teil des Bodens des Verdampfungsbehälters von der Heizeinrichtung erhitzt werden. Dadurch wird eine besonders große Fläche zur Verfügung gestellt, an der sich Kalk bilden und ansammeln kann. Es ist natürlich auf möglich und denkbar, dass die Heizeinrichtung in einer oder mehreren Seitenwänden und/oder im Boden des Verdampfungsbehälters vorgesehen ist.

Es ist weiter bevorzugt, dass der Heizeinrichtung ein Sensor zugeordnet ist. Dieser kann geregelt oder ungeregelt ausgestaltet sein.

In besonders bevorzugten Ausgestaltungen ist der Verdampfungsbehälter dazu geeignet und ausgebildet, als Kühlkörper zu dienen. Dadurch ist es möglich, dass die Heizeinrichtung auch nach Verdampfen der gesamten Flüssigkeitsmenge nicht ausgeschaltet werden muss, da der Verdampfungsbehälter so viel Wärme an die Umgebung abgeben kann, dass die Heizeinrichtung nicht überhitzt.

Es ist weiterhin auch bevorzugt, dass die Verdampfungseinrichtung innerhalb des Garraumes angeordnet ist. Dies ermöglicht eine sehr einfache und kostengünstige Konstruktionsweise der Verdampfungseinrichtung.

Besonders bevorzugt ist es, dass die Verdampfungseinrichtung wenigstens eine Zufuhr für Flüssigkeiten umfasst und/oder über die wenigstens eine Abfuhr mit einer Flüssigkeit befüllbar ist. Dabei kann eine Verdampfungseinrichtung, die innerhalb des Garraumes angeordnet ist, insbesondere über die wenigstens eine Abfuhr mit einer Flüssigkeit gefüllt werden. Wenn die Verdampfungseinrichtung außerhalb des Garraumes angeordnet ist, ist es zweckmäßig, dass Zufuhr und Abfuhr getrennt von einander angeordnet sind.

Zum Zuführen von Flüssigkeiten und zur Abfuhr von Dampf in den Garraum können Zufuhr und Abfuhreinrichtungen vorgesehen sein, die beispielsweise ein Schlauchsystem umfassen. Zur Zufuhr von Flüssigkeiten kann auch eine Pumpe vorgesehen sein. Denkbar und sinnvoll ist es allerdings auch, dass die zu verdampfende Flüssigkeit der Verdampfungseinrichtung über einen Festwasseranschluss zur Verfügung gestellt wird.

Um die Verdampfungseinrichtung möglichst Platz sparend innerhalb oder außerhalb des Garraumes anzubringen, ist es besonders bevorzugt und zweckmäßig, die Verdampfungseinrichtung oder wenigstens den Verdampfungsbehälter in einer Einprägung der den Garraum eingrenzenden Muffel zu befestigen. Natürlich kann der Verdampfungsbehälter auch an einer Wand der Muffel angebracht werden, die keine Einprägung aufweist.

Weitere Vorteile und Merkmale der vorliegenden Erfindung ergeben sich aus dem Ausführungsbeispiel, welches im Folgenden mit Bezug auf die beiliegenden Figuren erläutert wird. Dabei zeigt:
- Figur 1: eine schematische perspektivische Ansicht eines erfindungsgemäßen Gargerätes, das als Backofen ausgeführt ist;
- Figur 2: eine schematische Schnittansicht eines Ausführungsbeispiels einer erfindungsgemäßen Verdampfungseinrichtung ohne Kalkablagerungen für den Backofen nach Figur 1;
- Figur 3: eine schematische Schnittansicht eines weiteren Ausführungsbeispiels einer erfindungsgemäßen Verdampfungseinrichtung ohne Kalkablagerungen;
- Figur 4: eine schematische Schnittansicht eines weiteren Ausführungsbeispiels einer erfindungsgemäßen Verdampfungseinrichtung mit Kalkablagerungen; und
- Figur 5: eine schematische Schnittansicht eines weiteren Ausführungsbeispiels einer erfindungsgemäßen geschlossen ausgeführten Verdampfungseinrichtung ohne Kalkablagerungen.

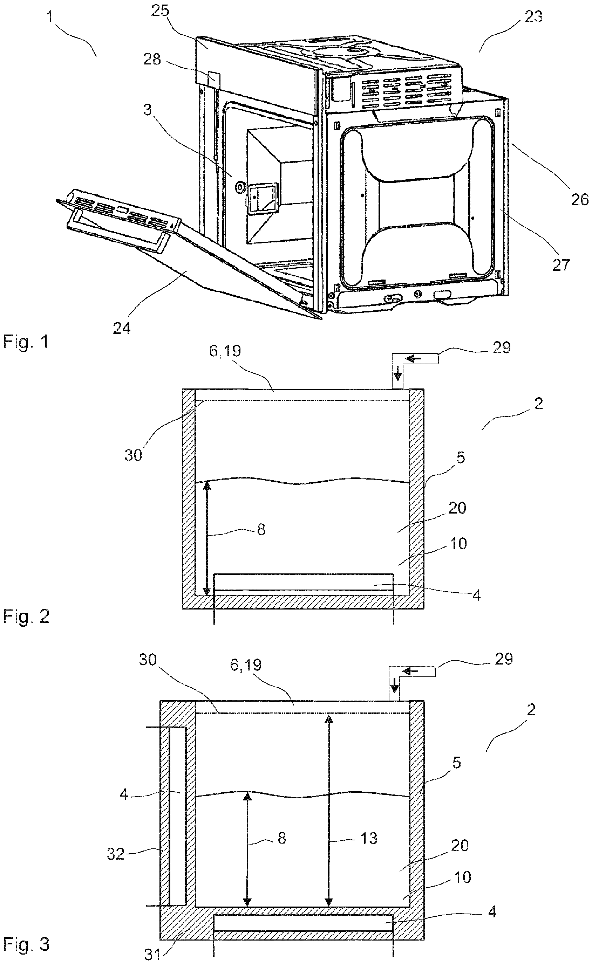

Figur 1 zeigt ein erfindungsgemäßes Gargerät 1, dass im vorliegenden Fall als Backofen 23 ausgeführt ist. Der Backofen 23 weist einen Garraum 3 auf, der mit einer Tür 24 verschließbar ist. In dem Garraum 3 können Speisen unter Verwendung verschiedener Betriebsprofile zubereitet werden. Über ein Bedienfeld 25, das wie hier als Touchpanel ausgeführt ist, können verschiedene Betriebsparameter eingestellt werden. Unter anderem kann zwischen Umluftbetrieb, Ober- und Unterhitze und einer Grillfunktion gewählt werden. Auch die Temperatur und das Bedampfen des Garraumes kann über dieses Bedienfeld eingestellt werden. Natürlich kann für verschiedene Funktionen auch ein separates Bedienelement vorgesehen sein. Das Bedienfeld 23 kann dazu und auch sonst nicht näher dargestellte Bedienelemente umfassen.

Unter bestimmten Voraussetzungen kann es für das Ergebnis eines Garprozesses vorteilhaft sein, den Garraum 3 während des Garvorgangs zu bedampfen. Dadurch kann das Austrocknen von Lebensmitteln, wie zum Beispiel großen Fleischstücken, besser verhindert werden. Insbesondere auch beim Backen von Brot oder Brötchen kann das Bedampfen während der Gehzeit des Teiges zu einem besseren Ergebnis führen, da die höhere Luftfeuchtigkeit die Oberfläche der Teiglinge geschmeidig hält, so dass diese nicht so schnell aufreißen.

Um den Garraum 2 des Backofens 23 zu bedampfen, ist an der hinteren Wand 26 des Gehäuses 27 eine in Figur 1 nicht sichtbare erfindungsgemäße Verdampfungseinrichtung 2 angeordnet. Ein Ausführungsbeispiel einer solchen erfindungsgemäßen Verdampfungseinrichtung 2 ist in den Figur 2 - 5 dargestellt.

Eine erfindungsgemäße Ausführung einer Verdampfungseinrichtung 2 ist schematisch in Figur 2 gezeigt. Die Verdampfungseinrichtung 2 umfasst hier einen Verdampfungsbehälter 5 und eine Heizeinrichtung 4. Die Verdampfungseinrichtung 2 ist in diesem Beispiel als offenes System ausgelegt, wobei der Verdampfungsbehälter 5 nach oben eine Öffnung aufweist, die als Abfuhr für Dampf 6 dient. Diese Öffnung kann verschiedene Größen haben und eventuell auch seitlich an dem Verdampfungsbehälter 5 angeordnet sein. Eine Flüssigkeit 20, insbesondere Wasser, kann über eine Zuleitung 29 durch diese Öffnung in den Verdampfungsbehälter 5 eingefüllt werden. In dieser Ausgestaltung gelangt die Flüssigkeit 20 über eine Zufuhr 19 in den Verdampfungsbehälter 5, die gleich der Abfuhr 6 ist.

Der Verdampfungsbehälter 5 hat ein maximales Gesamtvolumen 30, das je nach Ausführung verschiedene Größen aufweisen kann. Insbesondere sind Größen zwischen 10 ml und 1000 ml bevorzugt, es können aber auch andere Volumen des Verdampfungsbehälters 5 vorteilhaft sein.

Die Heizeinrichtung 4 ist hier als frei in der Flüssigkeit 20 liegende Heizquelle ausgeführt, die die zu verdampfende Flüssigkeitsmenge 8 in dem Verdampfungsbehälter 5 auf einmal aufheizt.

Figur 3 zeigt ein anderes Ausführungsbeispiel einer erfindungsgemäßen Verdampfungseinrichtung 2. Dabei sind zwei Heizeinrichtungen 4 vorgesehen, die die zu verdampfende Flüssigkeitsmenge 8 erhitzen. Dabei ist eine Heizeinrichtung 4 in den Boden 31 und eine Heizeinrichtung 4 in eine Seitenwand 32 des Verdampfungsbehälters 5 integriert. Auch andere Anordnungen der Heizeinrichtungen 4 und Ausgestaltungen mit mehr als zwei Heizeinrichtungen 4 sind denkbar und sinnvoll. Besonders bevorzugt ist aber auch die Verwendung von einer einzigen Heizeinrichtung 4, die dann zweckmäßig in den Boden 31 des Verdampfungsbehälters 5 integriert ist.

Wenn sich noch kein Reststoff 11 in der dem Verdampfungsbehälter 5 zugeordneten Auffangeinrichtung 10 abgesetzt hat, entspricht das Gesamtvolumen 30 des Verdampfungsbehälters 5 dem Flüssigkeitsaufnahmevolumen 13. Die zu verdampfende Flüssigkeitsmenge 8 sollte dementsprechend derart ausgewählt sein, dass im Wesentlichen die gesamte Menge 8 in dem Verdampfungsbehälter 5 aufnehmbar ist. In dem hier gezeigten Beispiel ist eine Auffangeinrichtung 10 vorgesehen, die Teil des Verdampfungsbehälters 5 ist.

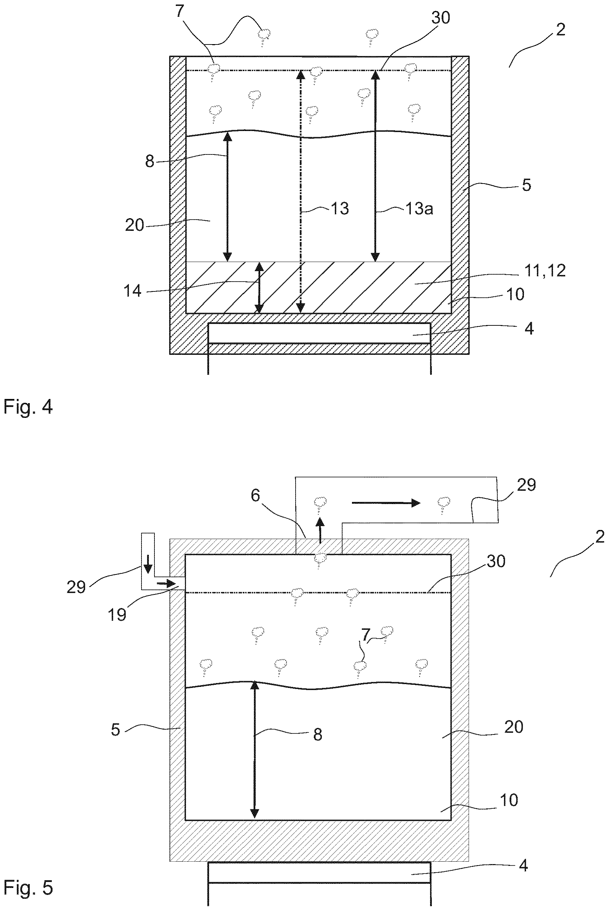

Figur 4 zeigt eine erfindungsgemäße Verdampfungseinrichtung 2, bei der sich eine dicke Schicht aus Reststoff 11 auf dem Boden des Verdampfungsbehälters 5 abgesetzt hat. Die Kalkschicht 12, die sich in der Auffangeinrichtung 10 abgesetzt hat, ist zur besseren Veranschaulichung stark schematisch und sehr groß dargestellt. Auf die realistische Darstellung des Verhältnisses zwischen dem Flüssigkeitsaufnahmevolumen 13 und dem Reststoffaufnahmevolumen 14 wird hier zur besseren Verdeutlichung keinen Wert gelegt.

Man sieht, dass die langsam über die Zeit wachsende Kalkschicht 12 das Reststoffaufnahmevolumen 14 definiert. Dieses vergrößert sich mit der Zeit, je nach dem, wie oft die Verdampfungseinrichtung 2 verwendet wird. Zu Beginn, also ohne Kalkablagerungen 12, ist das Flüssigkeitsaufnahmevolumen 13 gleich dem Gesamtvolumen 30 des Verdampfungsbehälters 5. Dabei ist darauf zu achten, dass nur so viel Flüssigkeit 20 in den Verdampfungsbehälter 5 gefüllt werden sollte, dass die während der Verdampfung kochende Flüssigkeit 20 nicht übersprudeln kann. Entsteht nun durch das Ausfallen von Kalk 12 während der Verdampfung eine Kalkschicht 12, die dann das Volumen des Reststoffaufnahmevolumens 14 aufweist, wird das hier gestrichelt dargestellte Flüssigkeitsaufnahmevolumen 13 entsprechend kleiner und entspricht nur noch dem Flüssigkeitsaufnahmevolumen 13a.

Es ist daher darauf zu achten, dass das gesamte Fassungsvermögen 30 so groß ausgelegt wird, dass die zu verdampfende Flüssigkeitsmenge 8 nicht größer als das Flüssigkeitsaufnahmevolumen 13, 13a ist, oder durch zunehmende Verkalkung des Verdampfungsbehälter 5 größer als dieses wird.

Dass sich bei der Verdampfung von Flüssigkeiten 20, insbesondere von Wasser, Kalk 12 absetzt, ist völlig normal. Immer wenn Wasser auf über 60°C erhitzt wird, fällt Kalk 12 aus. Dieser lagert sich bevorzugt im Bereich der Heizeinrichtung 4 an. Bei weiteren Verdampfungsvorgängen kann dann bei herkömmlichen Verdampfern ein Teil dieser Kalkschicht 12 wieder abplatzen zu einer Funktionsstörung des Verdampfers führen, da abgeplatzter Kalk 12 zum Beispiel die Verbindungsleitungen innerhalb eines Verdampfers verstopfen kann. Da eine erfindungsgemäße Verdampfungseinrichtung aber einen großzügig ausgestalteten Verdampfungsbehälter 5 mit einer Auffangeinrichtung 10 umfasst, wirkt sich der abgelagerte Kalk nicht in diesem Maße auf die Funktion der Verdampfungseinrichtung aus. Es können keine Verbindungsstücke oder Verbindungsbereiche verstopfen, wodurch die bei herkömmlichen Dampferzeugern lästige Wartungsarbeit, das Entkalken, wesentlich seltener durchzuführen ist und vorzugsweise sogar ganz überflüssig wird.

Um möglichst gar nicht Entkalken zu müssen, richtet sich die Bemessung der verschiedenen Volumen nach der Lebensdauer des Gargerätes1. Die während der gesamten Lebensdauer des Gargerätes 1 erwartete Menge an Kalk 11 bestimmt die nötige Größe der Auffangeinrichtung 10, also das benötige Reststoffaufnahmevolumen 14. Um die ausreichende Größe der Auffangeinrichtung 10 zu ermitteln, müssen verschiedene Parameter berücksichtigt werden. Man muss die durchschnittliche Häufigkeit der Verwendung der Dampffunktion auf die durchschnittliche Lebenserwartung des entsprechenden Gargerätes 1 hochrechnen. Dabei wird zum Beispiel die Benutzung der Dampffunktion alle 2, 3, 4, 5, 10 oder sogar jeden Tag angenommen und auf eine durchschnittliche Lebensdauer von zum Beispiel 1, 2, 3, 4, 5 oder 10 Jahren bezogen. Unter weiterer Berücksichtigung von zum Beispiel der Wasserhärte ergibt sich die Menge an Kalk 12, die mindestens von der Auffangeinrichtung 10 aufnehmbar sein muss, um ein Entkalken der Verdampfungseinrichtung 2 zu vermeiden. Sollte sich dennoch mehr Kalk 12 ablagern, als von der Auffangeinrichtung 10 aufgenommen werden kann, kann es eventuell nötig werden, die Verdampfungseinrichtung 2 einmal oder auf die gesamte Lebenszeit wenige Male zu entkalken oder zu entleeren.

Die in den Figuren 2 - 4 gezeigten Ausführungsformen einer erfindungsgemäßen Verdampfungseinrichtung 2, die als offene Behälter ausgeführt sind, eignen sich besonders zur Verwendung innerhalb des Garraumes 3. Dazu kann die Verdampfungseinrichtung 2 zum Beispiel in einer Einprägung in der den Garraum 3 begrenzenden Muffel 21 angeordnet sein, um möglichst Platz sparend in dem Garraum 3 untergebracht zu werden. Bei solchen Ausgestaltungen der Verdampfungseinrichtung 2 ist besonders bevorzugt die Abfuhr 6 für Dampf 7 gleich der Zufuhr 19 für Flüssigkeiten 20. Die Flüssigkeit 20 kann dabei einfach zum Beispiel von oben über eine entsprechende Leitung 29 eingefüllt werden.

In Figur 5 ist eine weitere Ausführungsform einer erfindungsgemäßen Verdampfungseinrichtung 2 schematisch dargestellt, die insbesondere zur Anordnung außerhalb des Garraumes geeignet ist. Dabei kann die Verdampfungseinrichtung bevorzugt an der Rückwand der den Garraum 3 eingrenzenden Muffel 21 angebracht sein. Es ist aber auch denkbar, diese Ausführungsform innerhalb des Garraumes 3 anzubringen und zu benutzen.

In einer solchen Ausführung außerhalb des Garraumes 3 ist der Verdampfungsbehälter 5 im Gegensatz zu den zuvor beschriebenen Ausführungsformen nicht offen, sondern geschlossen ausgeführt. Dadurch ist es sinnvoll und zweckmäßig, dass die Zufuhr 19 für Flüssigkeiten 20 getrennt von der schematisch dargestellten Abfuhr 6 für Dampf 7 ausgestaltet ist. Zum Einleiten von Dampf 7 in den Garraum 3 kann dann zusätzlich noch zum Beispiel ein Dampfröhrchen 29 und/oder ein Schlauch 29 nötig sein, um die Abfuhr 6 für Dampf 7 mit dem Garraum 3 zu verbinden.

Auch eine weitere Anordnung der Heizeinheit 4 ist in Figur 5 gezeigt. Dabei befindet sich die Heizeinrichtung 4 unterhalb des Verdampfungsbehälters 5. Auch eine hier nicht dargestellte seitliche Anordnung der Heizeinrichtung 4 außerhalb des Verdampfungsbehälters kann zweckmäßig sein.

Wenn die Zufuhr wie in der hier gezeigten Ausführungsform seitlich an dem Verdampfungsbehälter 5 angeordnet ist, sollte darauf geachtet werden, dass das maximale Fassungsvermögen 30 des Verdampfungsbehälters die Höhe der Zufuhr 19 übersteigt, um einen Rücklauf der Flüssigkeit 20 zu vermeiden.

Bei allen gezeigten und denkbaren Ausgestaltungen kann zum Zuführen von Flüssigkeiten 20 ein Schlauchsystem vorgesehen sein, dass in Verbindung mit einem Vorratsbehälter steht. Die Flüssigkeit 20 kann dann entweder durch ein bevorzugt vorliegendes Gefälle in die Verdampfungseinrichtung 2 geleitet werden oder auch mittels einer Pumpe in den Verdampfungsbehälter 5 gepumpt werden. Die in Figur 1 an dem Bedienfeld angedeutete Öffnung 28 kann für diese Zwecke genutzt werden. Ein Vorratsbehälter kann beispielsweise an diese ansteck- oder anschließbar sein. Auch die klappbare Ausführung der Einfüllöffnung 28 als Trichter ist denkbar, in die Wasser mit einem beliebigen Gefäß eingefüllt werden kann. Auch die Verwendung eines Festwasseranschlusses ist sinnvoll und zweckmäßig. Dabei wären dann entsprechende Ventile zum Steuern des Flüssigkeitsstroms nötig.

Es liegt weiter im Rahmen des Könnens eines Fachmanns, die beschriebenen Ausführungsbeispiele in nicht dargestellter Weise abzuwandeln, um die beschriebenen Effekte um erzielen, ohne dabei den Rahmen der Erfindung zu verlassen.

### Bezugszeichenliste

- 1: Gargerät
- 2: Verdampfungseinrichtung
- 3: Garraum
- 4: Heizeinrichtung
- 5: Verdampfungsbehälter
- 6: Abfuhr
- 7: Dampf
- 8: zu verdampfende Flüssigkeitsmenge
- 9: Heizquelle
- 10: Auffangeinrichtung
- 11: Reststoff
- 12: Kalk
- 13: Flüssigkeitsaufnahmevolumen
- 13a: Flüssigkeitsaufnahmevolumen
- 14: Reststoffaufnahmevolumen
- 15: vorbestimmte Zeit
- 16: erwartete Menge
- 17: Sensor
- 18: Kühlkörper
- 19: Zufuhr
- 20: Flüssigkeit
- 21: Muffel
- 22: Wand
- 23: Backofen
- 24: Tür
- 25: Bedienfeld
- 26: hintere Wand
- 27: Gehäuse
- 28: Einfüllöffnung
- 29: Schlauch, Dampfröhrchen
- 30: Gesamtvolumen/Fassungsvermögen
- 31: Boden
- 32: Seitenwand

## Patentansprüche

1. Gargerät (1) mit wenigstens einer Verdampfungseinrichtung (2) zum Bedampfen wenigstens eines Garraumes (3), wobei die wenigstens eine Verdampfungseinrichtung (2) wenigstens eine Heizeinrichtung (4) und wenigstens einen Verdampfungsbehälter (5) umfasst, wobei der Verdampfungsbehälter (5) wenigstens eine Abfuhr (6) für Dampf (7) umfasst, die dazu geeignet und ausgebildet ist, den Dampf (7) wenigstens teilweise in den wenigstens einen Garraum (3) zu führen,
**dadurch gekennzeichnet,**
**dass** ein erheblicher Anteil der zu verdampfende Flüssigkeitsmenge (8) in dem Verdampfungsbehälter (5) aufnehmbar ist und dieser Anteil der zu verdampfenden Flüssigkeit (8) in dem wenigstens einen Verdampfungsbehälter (5) aufheizbar und verdampfbar ist.

2. Gargerät (1) nach Anspruch 1,
**dadurch gekennzeichnet,**
**dass** der erhebliche Anteil der zu verdampfenden Flüssigkeitsmenge wenigstens 50%, insbesondere wenigstens 75% der zu verdampfenden Flüssigkeitsmenge ist und vorzugsweise die gesamte zu verdampfende Flüssigkeitsmenge ist.

3. Gargerät (1) nach einem der vorherigen Ansprüche,
**dadurch gekennzeichnet,**
**dass** der wenigstens eine Garraum (3) über wenigstens eine Heizquelle (9) thermisch beheizbar ist, wobei wenigstens eine Heizquelle einer Gruppe von Heizquellen entnommen ist, die Unterhitze-, Oberhitze-, Heißluft-, Grill- oder Mikrowellenheizquellen umfasst.

4. Gargerät (1) nach einem der vorhergehenden Ansprüche,
**dadurch gekennzeichnet,**
**dass** der wenigsten einen Heizeinrichtung (4) eine Auffangeinrichtung (10) für wenigstens einen Reststoff (11), insbesondere für Kalk (12), zugeordnet ist.

5. Gargerät (1) nach einem der vorhergehenden Ansprüche,
**dadurch gekennzeichnet,**
**dass** die Auffangeinrichtung (10) Teil des Verdampfungsbehälters (5) ist.

6. Gargerät (1) nach einem der vorhergehenden Ansprüche,
**dadurch gekennzeichnet,**
**dass** der Verdampfungsbehälter (5) ein Flüssigkeitsaufnahmevolumen (13) und ein Reststoffaufnahmevolumen (14) aufweist, wobei das Reststoffaufnahmevolumen (14) dazu geeignet und ausgebildet ist, wenigstens die in einer vorbestimmten Zeit (15) erwartete Menge (16) des wenigstens einen Reststoffs (11) aufzunehmen.

7. Gargerät (1) nach Anspruch 5,
**dadurch gekennzeichnet,**
**dass** das Reststoffaufnahmevolumen (14) eine Größe von wenigstens 1%, 2%, 5%, 10%, 20%, 30%, 40% oder 50% des Flüssigkeitsaufnahmevolumens (13) aufweist.

8. Gargerät (1) nach einem der vorhergehenden Ansprüche,
**dadurch gekennzeichnet,**
**dass** die wenigstens eine Heizeinrichtung (4) großflächig ausgeführt ist.

9. Gargerät (1) nach einem der vorhergehenden Ansprüche,
**dadurch gekennzeichnet,**
**dass** der wenigstens einen Heizeinrichtung (4) wenigstens ein Sensor (17) zugeordnet ist.

10. Gargerät (1) nach einem der vorhergehenden Ansprüche,
**dadurch gekennzeichnet,**
**dass** der Verdampfungsbehälter (5) dazu geeignet und ausgebildet ist, als Kühlkörper (18) zu dienen.

11. Gargerät (1) nach einem der vorhergehenden Ansprüche,
**dadurch gekennzeichnet,**
**dass** die Verdampfungseinrichtung (2) innerhalb des Garraumes (3) angeordnet ist.

12. Gargerät nach einem der vorhergehenden Ansprüche,
**dadurch gekennzeichnet,**
**dass** die Verdampfungseinrichtung (2) wenigstens eine Zufuhr (19) für Flüssigkeiten (20) umfasst und/oder über die wenigstens eine Abfuhr (6) mit einer Flüssigkeit (20) befüllbar ist.

13. Gargerät (1) nach einem der vorhergehenden Ansprüche,
**dadurch gekennzeichnet,**
**dass** der Verdampfungsbehälter (5) in einer Einprägung der den Garraum (3) eingrenzenden Muffel (21) oder an wenigstens einer Wand (22) der Muffel (21) befestigt ist.
